**Europäisches Patentamt**

**European Patent Office**

**Office européen des brevets**

(11) Veröffentlichungsnummer: **0 250 509**
**B1**

(12) **EUROPÄISCHE PATENTSCHRIFT**

(45) Veröffentlichungstag der Patentschrift:
**08.11.89**

(51) Int. Cl.⁴: **C 05 C 1/02, C 05 C 3/00, C 05 G 3/08**

(21) Anmeldenummer: **87900128.7**

(22) Anmeldetag: **16.12.86**

(86) Internationale Anmeldenummer:
**PCT/EP 86/00752**

(87) Internationale Veröffentlichungsnummer:
**WO 87/03579 (18.06.87 Gazette 87/13)**

(54) **VERFAHREN ZUR HERSTELLUNG VON STICKSTOFFDÜNGERN.**

(30) Priorität: **16.12.85 DE 3544399**

(43) Veröffentlichungstag der Anmeldung:
**07.01.88 Patentblatt 88/1**

(45) Bekanntmachung des Hinweises auf die Patenterteilung:
**08.11.89 Patentblatt 89/45**

(84) Benannte Vertragsstaaten:
**AT BE DE FR GB IT NL SE**

(56) Entgegenhaltungen:
**DE-A- 3 237 905**
**FR-A- 2 388 778**
**GB-A- 908 493**
**GB-A- 935 999**

**Chemical Abstracts, volumen 73, No: 25, 21 December 1970, (Columbus, Ohio, US), see page 312, abstract 130320x**
**ChemicaL Abstracts, volumen 92, No: 19, 12 May 1980, Columbus, Ohio, US), "Anticaking products for treating pulverulent substances such as fertilizers", see page 526, abstract 163003s,**

(73) Patentinhaber: **SKW Trostberg Aktiengesellschaft, Dr.-Albert-Frank-Strasse 32 Postfach 12 62, D-8223 Trostberg (DE)**

(72) Erfinder: **SOLANSKY, Svatopluk, Bergstrasse 4 - Eglsee, D-8223 Trostberg (DE)**
Erfinder: **KRISTOF, Wolfgang, Herzog-Ludwig-Strasse 14a, D-8223 Trostberg (DE)**

(74) Vertreter: **Huber, Bernhard, Dipl.-Chem. et al, Patentanwälte H. Weickmann, Dr. K. Fincke F.A. Weickmann, B. Huber Dr. H. Liska, Dr. J. Prechtel Möhlstrasse 22 Postfach 860 820, D-8000 München 86 (DE)**

## Beschreibung

Die vorliegende Erfindung betrifft ein Verfahren zur Herstellung von Stickstoffdüngern auf Basis von Ammoniumsalzen mit einem Gehalt an Dicyandiamid.

Es ist ein bekanntes Problem, dass ammoniumhaltige Dünger im Boden durch die Anwesenheit von nitrifizierenden Bakterien sehr leicht oxidiert werden. Bei diesem Vorgang, den man als Nitrifikation bezeichnet, wird der Ammonium-Stickstoff durch das Bacterium nitrosomonas zu Nitrit oxidiert. Anschliessend wird dann das Nitrit durch das Bacterium nitrobacter in das Nitrat umgewandelt, welches im Boden leicht beweglich ist und durch Auswaschen verlorengehen kann. Auf diese Weise entstehen nicht nur merkliche Stickstoffverluste bei der Düngung, sondern es können auch Probleme bei der Trinkwasser-Gewinnung hervorgerufen werden, wenn das Nitration ins Grundwasser gelangt. Zur Lösung dieses Problems setzt man dem Stickstoffdüngemittel einen Nitrifikationshemmer zu, der die Oxidation des Ammonium-Ions unterbindet. So wird bspw. gemäss der FR-PS 12 32 366 vorgeschlagen, Dicyandiamid als Nitrifikationshemmer einzusetzen.

Die Herstellung der Dicyandiamid enthaltenden Ammondünger kann auf verschiedene Weise erfolgen. So ist es bspw. gemäss der DE-OS 29 28 143 bekannt, das Dicyandiamid in fester Form einer wässerigen Schmelze des Ammonsalzes zuzusetzen und die Schmelze anschliessend zu granulieren. Auf diese Weise wird zwar ein Düngemittelkorn mit hoher Kornhärte und Abriebfestigkeit hergestellt, doch erfordert der Weg über die Schmelze einen hohen Energieeinsatz. Ausserdem kann es bei Temperaturen um 100° C bereits zu einer deutlichen Zersetzung des Dicyandiamids kommen, welches sich in Biguanid umwandelt. Auf diese Weise geht ein wertvoller Teil des Nitrifikationshemmstoffes verloren.

Um diese Zersetzung wirkungsvoll zu unterbinden, sind jedoch besondere Massnahmen bei der Reaktionsführung erforderlich, wodurch das Verfahren technisch aufwendig wird.

Gemäss der DE-OS 25 31 962 wird vorgeschlagen, das Dicyandiamid mit Hilfe eines Haftvermittlers und eines Emulgators auf die Oberfläche der ammoniumhaltigen Verbindungen aufzubringen. Bei diesem Vorgang, der in der Technik als Aufrollieren bezeichnet wird, werden zwar schonende Temperaturen eingehalten, doch weist das Produkt andere Nachteile auf. Weil das Dicyandiamid direkt auf der Oberfläche des Granulats sitzt und eine zum Verbacken neigende Substanz ist, ergibt sich der Nachteil des Zusammenbackens des entsprechenden Düngers. Dieser Effekt wird durch den eingesetzten Haftvermittler wie Soja-, Klauen- oder Schweröl eher noch verstärkt, weil diese Öle ebenfalls zum Verkleben neigen.

Daneben ist es gemäss GB-A-908 493 bekannt, Ammondüngergranulat mit Polyethylenglykol zu beschichten, um das Zusammenbacken des Granulats zu verhindern.

Der vorliegenden Erfindung lag daher die Aufgabe zugrunde, ein Verfahren zur Herstellung von Stickstoffdüngern auf Basis von Ammonsalzen mit einem Gehalt an Dicyandiamid zu entwickeln, welches die genannten Nachteile des Standes der Technik nicht aufweist, sondern es ohne grossen technischen Aufwand ermöglicht, einen nichtbakkenden, dicyandiamidhaltigen Ammondünger unter schonendsten Bedingungen herzustellen.

Diese Aufgabe wurde erfindungsgemäss dadurch gelöst, dass man die Oberfläche des Ammondüngerkorns mit einem geschmolzenen Polyethylenglykol bei einer Temperatur von 50 bis 90° C besprüht, dann das Dicyandiamid auf das Korn aufbringt und anschliessend so weit abkühlt, dass das Polyethylenglykol fest wird.

Es hat sich nämlich überraschenderweise gezeigt, dass man auf diese Weise das Dicyandiamid problemlos und ohne Zersetzung in den Ammondünger einbauen kann. Ausserdem zeigt das erhaltene Produkt eine sehr geringe Neigung zum Abrieb des Dicyandiamids und zum Zusammenbakken der Granulate, was ebenfalls nicht vorsehbar war.

Beim Verfahren entsprechend der vorliegenden Erfindung werden die ammoniumhaltigen Düngemittel in den üblichen Granuliervorrichtungen wie z. B. Granulierteller oder -trommel mit einem geschmolzenen Polyethylenglykol besprüht. Als Ammonsalze können alle als Düngemittel verwendbaren Verbindungen eingesetzt werden, wie z. B. Ammonsulfat, -nitrat oder -phosphat. Es sind jedoch auch Mischungen von Ammonsalzen wie z. B. Ammonsulfatsalpeter (ASS) oder Kalkammonsalpeter (KAS) verwendbar.

Es ist erfindungswesentlich, dass die Polyethylenglykole in geschmolzenem Zustand bei einer Temperatur von 50 bis 90° C, vorzugsweise 60 bis 80° C eingesetzt werden, weil sie in geschmolzenem Zustand besonders gute Haftungseigenschaften aufweisen, d. h. dass das Dicyandiamid besonders gut an das Düngemittelkorn gebunden wird. Ein Überschreiten der Temperatur von 90° C empfiehlt sich nicht, weil dann mit einer beginnenden Zersetzung des Dicyandiamids zu rechnen ist. Auch ein Unterschreiten der Temperatur von 50° C ist wenig sinnvoll, weil das Polyethylenglykol einerseits beim Aufsprühen flüssig und andererseits bei Raumtemperatur fest sein soll. Aus dieser Forderung ergibt sich logischerweise, dass das Polyethylenglykol einen Schmelzpunkt von 40 bis 80° C bzw. ein Molekulargewicht von 1000 bis 50 000 aufweisen muss.

Anstelle des Polyethylenglykols kann man auch ein Gemisch aus Polyethylenglykol und langkettigen primären und/oder sekundären Aminen mit $C_{10}$- bis $C_{30}$-Kohlenstoffketten einsetzen, wobei der Anteil Polyethylenglykol mindestens 50 Gew.-% betragen sollte. Für die Auswahl der langkettigen Amine ergibt sich ebenfalls das Kriterium, einen Schmelzpunkt von 40 bis 80° C aufweisen zu müssen, um im Rahmen der vorliegenden Erfindung eingesetzt werden zu können. Als bevorzugtes langkettiges Amin wird ein Produkt verwendet, welches unter der Bezeichnung «Flotigam S» (Hoechst AG) auf dem Markt ist. Auch Mischungen von Polyethylenglykolen und langkettigen Aminen sind unter der Bezeichnung «Lilamin» im Handel erhältlich. Die Menge des eingesetzten, Polyethylenglykol enthaltenden Haftvermittlers kann in weiten Grenzen variiert werden, doch ist eine Menge von 0,01-5 Gew.-%, insbesondere 0,1-2 Gew.-% bezogen auf das Gewicht des Ammondüngers, bevorzugt. Es sind prinzipiell auch grössere Mengen als 5 Gew.-% möglich, doch wird dadurch die Haftfestigkeit des Dicyandiamids nicht mehr wesentlich erhöht.

Unmittelbar nach dem Besprühen des Ammondüngers mit dem geschmolzenen Polyethylenglykol wird das Dicyandiamid auf die Oberfläche des Ammondüngerkorns aufgebracht, wobei ebenfalls die erforderlichen Temperaturen von 40 bis 90° C eingehalten werden müssen. Die Menge des eingesetzten Dicyandiamids richtet sich nur nach den gewünschten Eigenschaften des Ammondüngers, d. h. nach der gewünschten Langzeitwirkung. Üblicherweise ist ein Gehalt von 0,1 bis 30 Gew.-%, vorzugsweise 3 bis 10 Gew.-%, bezogen auf das Gewicht des Ammondüngers ausreichend. Um die Haftfestigkeit des Dicyandiamids zu optimieren, ist es erforderlich, möglichst feinteiliges Dicyandiamid zu verwenden, dessen Teilchengrösse möglichst unter 200 µm liegen soll.

Nach dem Aufbringen des Dicyandiamids werden die hergestellten Granulate so weit abgekühlt, dass das Polyethylenglykol wieder fest bzw. wachsartig wird. Dies kann durch Einblasen von Kaltluft in die Granuliervorrichtung oder langsames Abkühlen auf Raumtemperatur erfolgen. Auf diese Weise wird eine äussere Schicht bestehend aus Polyethylenglykol und Dicyandiamid gebildet, die einerseits für die Haftfestigkeit des Dicyandiamids und andererseits für die geringe Neigung zum Zusammenbacken der Granulate verantwortlich ist, die eine Korngrösse von 1 bis 10 mm, vorzugsweise 2-5 mm aufweisen.

Mit Hilfe des erfindungsgemässen Verfahrens ist es also nicht nur möglich, besonders schonend und kostengünstig das Dicyandiamid in den Ammondünger einzubauen, sondern auch ein Produkt bereitzustellen, welches sowohl einen geringen Abrieb des Dicyandiamids als auch eine geringe Neigung zum Zusammenbacken aufweist.

Die nachfolgenden Beispiele sollen die Erfindung näher erläutern, ohne sie jedoch darauf zu beschränken.

*Beispiele*

Gemäss den Beispielen 1 bis 5 wird jeweils in einer Granuliertrommel der Ammondünger vorgelegt, anschliessend das Polyethylenglykol oder das Gemisch aus Polyethylenglykol und langkettigem Amin bei einer bestimmten Temperatur aufgesprüht (Dauer ca. 10 Minuten). Daraufhin wird handelsübliches Dicyandiamid (Teilchengrösse < 100 µm) auf das Düngemittelkorn aufgebracht (Dauer ca. 10 Minuten) und anschliessend auf Raumtemperatur abgekühlt, wobei folgende Verfahrensparameter eingehalten wurden:

*Beispiel 1:*

a) Mengen:
Ammonsulfatsalpeter                  388 g
(Ammonsulfat:Ammonnitrat 60:40)
Dicyandiamid                          12 g
Lilamin® AG 81                         4 g
(Gemisch aus Polyethylenglykol und langkettigem Amin 80:20)

b) Bedingungen:
Temperatur:                          70° C

c) Abrieb des Dicyandiamids:     0,8 Gew.-%
(bezogen auf das Gesamtgewicht des eingebrachten Dicyandiamids)

*Beispiel 2:*

a) Mengen:
Ammonsulfatsalpeter                  388 g
(s. Beispiel 1)
Dicyandiamid                          12 g
Lilamin" AG 81                         3 g
(= 0,75%)

b) Bedingungen:
wie Beispiel 1

c) Abrieb des Dicyandiamids:     3,3 Gew.-%

*Beispiel 3:*

a) Mengen:
Ammonsulfatsalpeter                  388 g
(wie Beispiel 1)
Dicyandiamid                          12 g
Gemisch aus 80% «Polyglykol 6000 S»    4 g
(Fa. Hoechst) und                 (= 1,0%)
20% «Flotigam S» (Fa. Hoechst)

b) Bedingungen:
Wie Beispiel 1

c) Abrieb des Dicyandiamids:     0,8 Gew.-%

*Beispiel 4:*

a) Mengen:
Ammonsulfatsalpeter                  388 g
(wie Beispiel 1)
«Polyglykol 6000 S» (Fa. Hœchst)       2 g
(0,875 Gew.-%)
Dicyandiamid                          12 g

b) Bedingungen:
wie Beispiel 1

c) Abrieb des Dicyandiamids:     1,7 Gew.-%

*Beispiel 5:*

a) Mengen:
Ammonsulfat                          388 g
Lilamin" AG 81                       5,2 g
(= 1,3 Gew.-%)
Dicyandiamid                          12 g

b) Bedingungen:
Temperatur:                          60° C

c) Abrieb des Dicyandiamids:    14,2 Gew.-%

Der Abrieb wird mit Hilfe einer handelsüblichen Siebmaschine durch Absieben des Dicyandiamids ermittelt.

## Patentansprüche

1. Verfahren zur Herstellung von Stickstoffdüngern auf Basis von Ammonsalzen mit einem Gehalt an Dicyandiamid, dadurch gekennzeichnet, dass man die Oberfläche des Ammondüngerkorns mit einem geschmolzenen Polyethylenglykol bei einer Temperatur von 50 bis 90° C besprüht, dann das Dicyandiamid auf das Korn aufbringt und anschliessend das Granulat so weit abkühlt, dass das Polyethylenglykol wieder fest wird.

2. Verfahren nach Anspruch 1, dadurch gekennzeichnet, dass man das Besprühen des Ammondüngerkorns bei einer Temperatur von 60 bis 80° C vornimmt.

3. Verfahren nach den Ansprüchen 1 und 2, dadurch gekennzeichnet, dass das Polyethylenglykol einen Schmelzpunkt von 40 bis 80° C aufweist.

4. Verfahren nach den Ansprüchen 1 bis 3, dadurch gekennzeichnet, dass das Polyethylenglykol ein Molekulargewicht von 1000 bis 50 000 besitzt.

5. Verfahren nach den Ansprüchen 1 bis 4, dadurch gekennzeichnet, dass man bis zu 50 Gew.-% des Polyethylenglykols durch langkettige primäre und/oder sekundäre Amine mit $C_{10}$- bis $C_{30}$-Kohlenstoffketten ersetzt.

6. Verfahren nach den Ansprüchen 1 bis 5, dadurch gekennzeichnet, dass man das Polyethylenglykol in einer Menge von 0,01 bis 5 Gew.-%, vorzugsweise 0,1 bis 2 Gew.-%, bezogen auf das Gewicht des Ammondüngers, verwendet.

7. Verfahren nach den Ansprüchen 1 bis 6, dadurch gekennzeichnet, dass man das Dicyandiamid in einer Menge von 0,1 bis 30 Gew.-%, vorzugsweise 3 bis 10 Gew.-%, bezogen auf das Gewicht des Ammondüngers, auf das Düngemittelkorn aufbringt.

8. Verfahren nach den Ansprüchen 1 bis 7, dadurch gekennzeichnet, dass das Dicyandiamid eine Teilchengrösse von < 200 µm aufweist.

9. Verfahren nach den Ansprüchen 1 bis 8, dadurch gekennzeichnet, dass das Granulat eine Korngrösse von 1 bis 10 mm, vorzugsweise 2 bis 5 mm, besitzt.

## Claims

1. Process for the production of nitrogen fertilisers based on ammonium salts with a content of dicyandiamide, characterised in that one sprays the surface of the ammonium fertiliser granulate with a molten polyethylene glycol at a temperature of 50 to 90° C, then applies the dicyandiamide to the granulate and subsequently cools the granulate to such an extent that the polyethylene glycol again becomes solid.

2. Process according to claim 1, characterised in that one carries out the spraying of the ammonium fertiliser granulate at a temperature of 60 to 80° C.

3. Process according to claims 1 and 2, characterised in that the polyethylene glycol has a melting point of 40 to 80° C.

4. Process according to claims 1 to 4, characterised in that the polyethylene glycol possesses a molecular weight of 1,000 to 50,000.

5. Process according to claims 1 to 4, characterised in that one replaces up to 50 wt.% of the polyethylene glycol by long-chained primary and/or secondary amines with $C_{10}$ to $C_{30}$ carbon chain.

6. Process according to claims 1 to 5, characterised in that one uses the polyethylene glycol in an amount of 0.01 to 5 wt.%, preferably 0.1 to 2 wt.%, referred to the weight of the ammonium fertiliser.

7. Process according to claims 1 to 6, characterised in that one applies the dicyandiamide to the fertiliser granulate in an amount of 0.1 to 30 wt.%, preferably 3 to 10 wt.%, referred to the weight of the ammonium fertiliser.

8. Process according to claims 1 to 7, characterised in that the dicyandiamide has a particle size of < 200 µm.

9. Process according to claims 1 to 8, characterised in that the granulate possesses a grain size of 1 to 10 mm, preferably 2 to 5 mm.

## Revendications

1. Procédé de fabrication d'engrais azotés à base de sels d'ammonium contenant du dicyanodiamide, caractérisé en ce qu'on pulvérise à la surface du grain d'engrais ammoniacal un polyéthylèneglycol fondu à une température de 50 à 90° C, applique ensuite le dicyanodiamide sur le grain et refroidit subséquemment le granulé jusqu'à resolidification du polyéthylèneglycol.

2. Procédé selon la revendication 1, caractérisé en ce qu'on effectue la pulvérisation sur le grain d'engrais ammoniacal à une température de 60 à 80° C.

3. Procédé selon les revendications 1 et 2, caractérisé en ce que le polyéthylèneglycol présente un point de fusion de 40 à 80° C.

4. Procédé selon les revendications 1 à 3, caractérisé en ce que le polyéthylèneglycol possède un poids moléculaire de 1000 à 50 000.

5. Procédé selon les revendications 1 à 4, caractérisé en ce qu'on remplace jusqu'à 50% en poids du polyéthylèneglycol par des amines primaires et/ou secondaires à longue chaîne possédant des chaînes carbonées en $C_{10}$ à $C_{30}$.

6. Procédé selon les revendications 1 à 5, caractérisé en ce qu'on emploie le polyéthylèneglycol en une quantité de 0,01 à 5% en poids, de préférence de 0,1 à 2% en poids par rapport au poids de l'engrais ammoniacal.

7. Procédé selon les revendications 1 à 6, caractérisé en ce qu'on applique le dicyanodiamide sur le grain d'engrais en une quantité de 0,1 à 30% en poids, de préférence de 3 à 10% en poids par rapport au poids de l'engrais ammoniacal.

8. Procédé selon les revendications 1 à 7, caractérisé en ce que le dicyanodiamide présente une dimension de particule de < 200 µm.

9. Procédé selon les revendications 1 à 8, caractérisé en ce que le granulé possède une granulométrie de 1 à 10 mm, de préférence de 2 à 5 mm.